(19) Europäisches Patentamt
European Patent Office
Office européen des brevets

(11) Veröffentlichungsnummer : **0 103 739 B1**

# (12) EUROPÄISCHE PATENTSCHRIFT

(45) Veröffentlichungstag der Patentschrift : **19.07.89**

(51) Int. Cl.[4] : **C 09 B 44/02**, D 06 P 1/08, D 21 H 3/80

(21) Anmeldenummer : **83107950.4**

(22) Anmeldetag : **11.08.83**

## (54) Kationische Farbstoffe, ihre Herstellung und Verwendung.

(30) Priorität : **24.08.82 DE 3231398**

(43) Veröffentlichungstag der Anmeldung : **28.03.84 Patentblatt 84/13**

(45) Bekanntmachung des Hinweises auf die Patenterteilung : **19.07.89 Patentblatt 89/29**

(84) Benannte Vertragsstaaten : **CH DE FR GB LI**

(56) Entgegenhaltungen :
**DE-A- 1 965 992**
**FR-A- 1 533 643**
**Die Akte enthält technische Angaben, die nach dem Eingang der Anmeldung eingereicht wurden und die nicht in dieser Patentschrift enthalten sind.**

(73) Patentinhaber : **BAYER AG**
**D-5090 Leverkusen 1 Bayerwerk (DE)**

(72) Erfinder : **Wild, Peter, Dr.**
**Droste-Huelshoff-Strasse 2**
**D-5068 Odenthal (DE)**
Erfinder : **Stöhr, Frank-Michael, Dr.**
**Weidenweg 25**
**D-5093 Burscheid (DE)**

**EP 0 103 739 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung sind kationische Farbstoffe der allgemeinen Formel

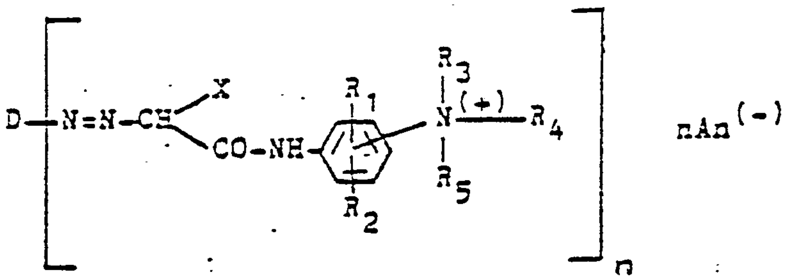

(I)

worin

D einen Rest der Formel

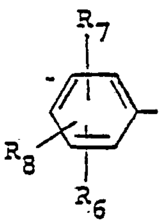

oder

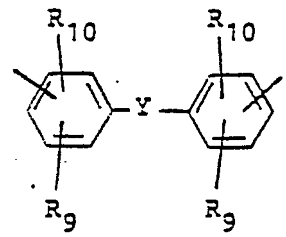

X einen Rest der Formel $COCH_3$, CN, $COOCH_3$, $COOC_2H_5$, $CONH_2$, $COC_6H_5$,

$R_1$ und $R_2$ unabhängig voneinander Wasserstoff, $C_1$- bis $C_4$-Alkyl, $C_1$- bis $C_4$-Alkoxy, Fluor, Chlor oder Brom, und

$R_3$, $R_4$ und $R_5$ unabhängig voneinander $C_1$- bis $C_4$-Alkyl, $C_3$- oder $C_4$-Alkenyl, Benzyl oder Phenylethyl, die durch Hydroxy, $C_1$- bis $C_4$-Alkoxy, Chlor, Brom oder Cyan und der Benzyl- und Phenylethylrest zusätzlich durch $C_1$- bis $C_4$-Alkyl substituiert sein können, bedeuten, oder

$R_3$ und $R_4$ gemeinsam mit dem Stickstoffatom, an das sie gebunden sind, einen gegebenenfalls durch $C_1$- bis $C_4$-Alkyl substituierten Pyrrolidin-, Morpholin-, Piperidin- oder Piperazinring bilden,

$R_6$ und $R_7$ unabhängig voneinander Wasserstoff, $C_1$- bis $C_4$-Alkyl, $C_1$- bis $C_4$-Alkoxy, Fluor, Chlor, Brom oder NH-Ac,

Ac $C_1$- bis $C_4$-Alkyl-carbonyl, -sulfonyl oder -carbamoyl, Benzoyl, Toluoyl, Phenyl- oder Tolyl-sulfonyl oder -carbamoyl oder gegebenenfalls substituiertes Triazinyl,

$R_8$ einen Rest der Formel

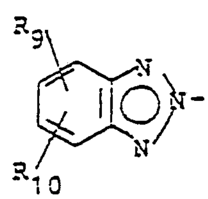

oder

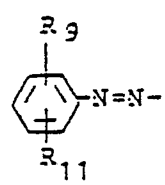

$R_9$-$R_{11}$ unabhängig voneinander Wasserstoff, $C_1$- bis $C_4$-Alkyl, $C_1$- bis $C_4$-Alkoxy, Chlor oder Brom und

$R_{11}$ zusätzlich

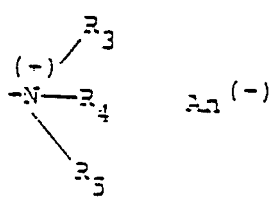

Y eine direkte Bindung oder ein Brückenglied,

n 1 oder 2 und

$An^{(-)}$ ein Anion bedeuten,

ihre Herstellung und ihre Verwendung zum Färben von synthetischen und natürlichen kationisch anfärbbaren Materialien wie Baumwolle, Papier, Leder, Polyacrylnitril und sauermodifizierte Polyester- und Polyamidfasern.

Anionen $An^{(-)}$ sind für die kationische Farbstoffe üblichen farblosen organischen und anorganischen Anionen beispielsweise Chlorid, Bromid, Jodid, Hydroxid, Hydrogenphosphat, Phosphat, Carbonat, Hydrogencarbonat, Perchlorat, Fluoroborat, Chlorozinkat, Methosulfat, Ethosulfat, Acetat, Formiat, Propionat, Lactat, Citrat, Benzosulfonat, Toluolsulfonat, Sulfat, Hydrogensulfat und Nitrat.

Das Anion ist im allgemeinen durch das Herstellungsverfahren gegeben. Vorzugsweise liegen die Farbstoffe als Chloride, Hydrogensulfate, Sulfate, Methosulfate, Carbonate, Hydrogencarbonate, Phosphate, Formiate, Acetate, Lactate, Citrate vor. Die Anionen können in bekannter Weise gegen andere Anionen ausgetauscht werden und als Mischungen vorliegen.

Als Beispiele für Ac = gegebenenfalls substituiertes Triazinyl sei der Rest

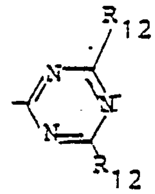

genannt, worin $R_{12}$ die weiter unten angegebene Bedeutung hat. Als Brückenglied Y kommen vorzugsweise in Betracht:

$—CO—NH—$, $—CO—$, $—NH—CO—NH$, $—CH_2—CH_2—$, $—CH=CH—$, $—CH_2—$, $—C(CH_3)_2—$, 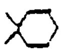, $—O—$, $—S—$, $—NH—$, $>N—C_1—C_4$-Alkyl, $—N=N—$, $—NH—CO—CH=CH—CO—NH—$, $—NH—CO—CH_2—CH_2—CO—NH—$ und

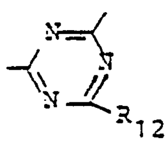

wobei $R_{12}$ für Alkyl, Aryl,

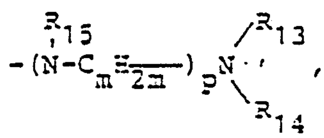 , $-O-R_{15}$ oder $-S-R_{15}$.

steht,

m 2 oder 3, p 0 oder 1 und

$R_{13}$, $R_{14}$ und $R_{15}$ Wasserstoff, Alkyl, Alkenyl, Aryl, Aralkyl oder Cycloalkyl bedeuten, oder

$R_{13}$ und $R_{14}$ gemeinsam mit dem N-Atom, an das sie gebunden sind, einen 5- oder 6-gliedrigen Ring bilden, oder

$R_{13}$ Amino bedeutet.

Bevorzugtes $R_{12}$ ist $R'_{12}$, das für $C_1$- bis $C_4$-Alkyl oder Phenyl, die durch Hydroxy, $C_1$- bis $C_4$-Alkoxy, Chlor oder Brom und Phenyl zusätzlich durch $C_1$- bis $C_4$-Alkyl substituiert sein können, oder für

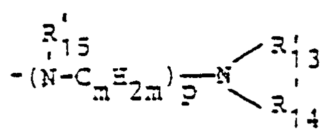 , $-O-R'_{15}$ oder $-S-R'_{15}$

steht, und

$R'_{13}$, $R'_{14}$ und $R'_{15}$ unabhängig voneinander Wasserstoff, gegebenenfalls durch Hydroxy, Halogen, Cyan oder $C_1$-$C_4$-Alkoxy substituiertes $C_1$-$C_4$-Alkyl, $C_2$-$C_4$-Alkenyl oder gegebenenfalls durch Halogen, $C_1$-$C_4$-Alkyl, Hydroxy oder $C_1$-$C_4$-Alkoxy substituiertes Benzyl, Phenylethyl, Phenyl, Naphthyl oder Cyclohexyl bedeuten, oder

$R'_{13}$ und $R'_{14}$ zusammen mit dem an sie gebundenen N-Atom ein gegebenenfalls durch $C_1$-$C_4$-Alkyl substituiertes Pyrrolidin, Piperidin, Morpholin oder Piperazin, dessen externes Stickstoffatom durch gegebenenfalls OH— oder $NH_2$— substituiertes $C_1$-$C_4$-Alkyl alkyliert oder quaterniert sein kann, bilden.

Besonders zu erwähnende Substituenten $R_{12}$ sind :

Amino-, Methylamino-, Dimethylamino-, Ethylamino-, Diethylamino-, 2-Hydroxyethylamino-, Bis-(2-hydroxyethyl)-amino-, Allylamino-, Diallylamino-, Methoxyethylamino-, Sulfato-ethylamino-, Carboxymethylamino-, N-Methyl-N-carboxymethyl-amino-, Carboxyethylamino-, N-Methyl-N-sulfomethylamino-, Sulfoethylamino-, N-Methyl-N-sulfoethyl-amino-, Cyclohexylamino-, Pyrrolidino-, Piperidino-, 1-Methylpiperazino-, 1-(β-Aminoethyl-) piperazino-, 1-(β-Hydroxyethyl-) piperazino-, Morpholino-, 4-Morpholinamino-, Benzylamino-, gegebenenfalls substituiertes Phenyl- oder Naphthylamino.

Besonders bevorzugt werden Farbstoffe der allgemeinen Formel

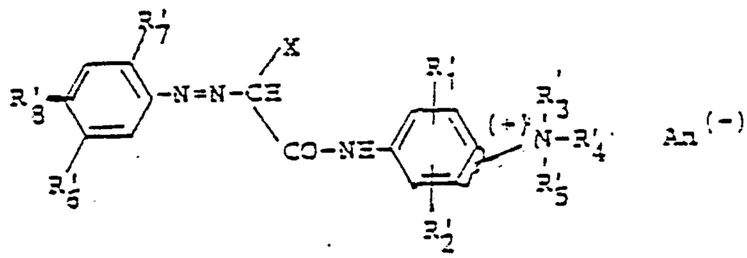

(II)

worin

$R'_6$ Wasserstoff, Methoxy, Ethoxy, Methyl, Ethyl, Fluor, Chlor, Brom oder NH-Ac,

$R'_7$ Wasserstoff, Fluor, Chlor, Brom, Methoxy, Ethoxy, Methyl oder Ethyl und

$R'_8$ einen Rest der Formel

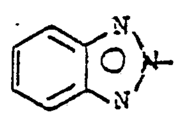

oder

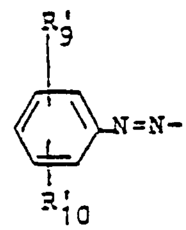

$R'_1$, $R'_2$, $R'_9$ und $R'_{10}$ unabhängig voneinander Wasserstoff, Fluor, Chlor, Brom, Methoxy, Ethoxy, Methyl oder Ethyl und

$R'_3$, $R'_4$ und $R'_5$ unabhängig voneinander $C_1$- bis $C_4$-Alkyl, β- oder γ-Hydroxy-$C_2$- bis $C_4$-Alkyl oder Benzyl bedeuten, oder

$R'_3$ und $R'_4$ mit dem Stickstoff einen Pyrrolidin-, Morpholin-, oder Piperidin-Ring bilden, und

X und $An^{(-)}$ die Bedeutung von Formel (I) haben.

Bevorzugte Farbstoffe der Formel (I) sind weiterhin Farbstoffe der allgemeinen Formel

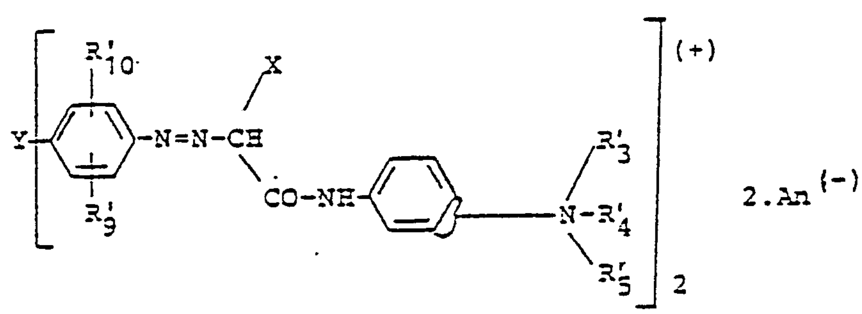

(III)

worin die Symbole die Bedeutung der Formeln (I) und (II) haben.

Von den Farbstoffen der Formeln (II) und (III) sind die mit X = CO—$CH_3$ hervorzuheben.

Die Farbstoffe der allgemeinen Formel (I) werden durch Diazotierung der Amine der Formel

$$D\text{-}(\text{-}NH_2)_n \qquad (IV)$$

und Kupplung mit den Verbindungen der Formel

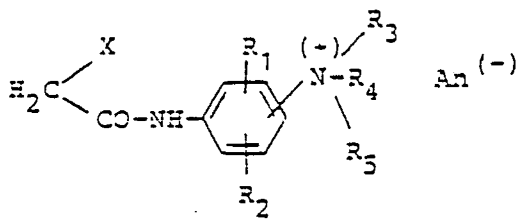

(V)

wobei die Symbole die in Formel (I) angegebene Bedeutung haben, erhalten.

Die Verbindungen der Formel (V) werden in an sich bekannter Weise hergestellt durch Umsetzung der Amine der Formel

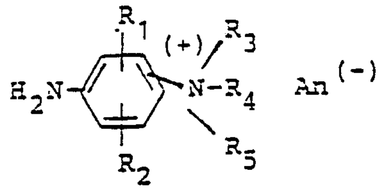

(VI)

mit einem der folgenden Reagenzien :

Diketen, Acetessigsäuremethylester, Acetessigsäureethylester, Cyanessigsäureethylester, Cyanessigsäuremethylester, Malonsäuredimethylester, Malonsäurediethylester, Malonsäuremonomethylesteramid, Malonsäuremonomethylesteriminoester, Benzoylessigsäuremethylester.

Die Diazotierung der Amine (IV) erfolgt in bekannter Weise bei Temperaturen zwischen 0 und 50 °C, wobei beispielsweise folgende Mono-aminobenzole verwendet werden können :

2-(4'-Amino-3'-methoxyphenyl)-benztriazol, 4-Aminoazobenzol und 4-Amino-2,3'-dimethylazobenzol.

Als Diamine der allgemeinen Formel (IV), n = 2, kommen z. B. in Betracht :

4,4'-Diaminoazobenzol, 3,3'-Dimethylbenzidin, 4,4'-Diamino-benzanilid, 2-(4-Aminophenyl)-5-amino-2H-benztriazol, 3,3'-Dichlorbenzidin, 4,4'-Diaminobenzophenon, 2-(4-Aminophenyl)-5-amino-benzimidazol, 4,4'-Diamino-N,N'-diphenylharnstoff, 4,4'-Diaminodiphenylamin, 1,2-Bis-(4'-Aminophenyl)-ethan, 4,4'-Diaminodiphenylamin, 1,2-Bis-(4'-aminophenyl)-methan, 2,2-Bis-(4-aminophenyl)-propan, 1,1-Bis-(4-aminophenyl)-cyclohexan, 4,4'-Diaminostilben, 3,3'-Dianisidin, 4,4'-Diaminodiphenylsulfid, 2,4-Bis[(3'-aminophenyl-amino)]-6-dimethylamino-triazin sowie weitere mit Cyanurchlorid verknüpfte Phenylendiamine, für die folgenden Formeln beispielhaft sind :

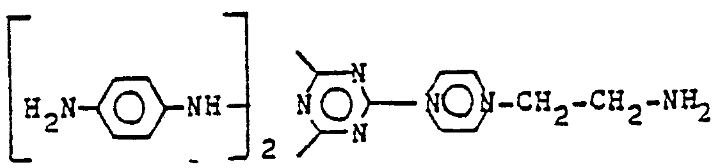

,

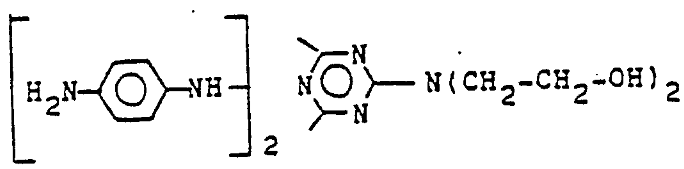

,

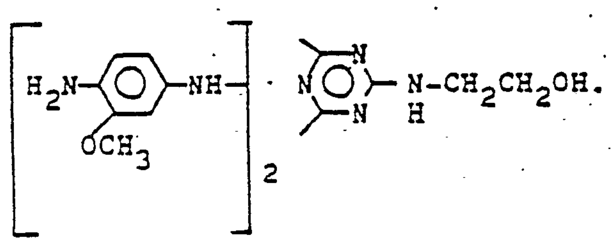

.

Die Kupplung erfolgt üblicherweise bei Temperaturen zwischen 0 und 50 °C, vorzugsweise bei Temperaturen zwischen 0 und 30 °C bei pH-Werten zwischen 2 und 9, vorzugsweise zwischen 3 und 5. Die Farbstoffe können isoliert und getrocknet werden, sie können aber auch mit geeigneten Lösungsmitteln in stabile, konzentrierte Lösungen überführt werden.

Solche Lösungen sind z. B. wäßrige Lösungen von Mineralsäuren und/oder organischen Säuren, z. B. Salzsäure, Schwefelsäure, Phosphorsäure, Ameisensäure, Essigsäure, Glykolsäure, Milchsäure, Methansulfonsäure.

Als Lösungsmittel können aber auch organische Lösungsmittel wie z. B. Ethylenglykol, Diglykol, Triglykol, Glycerin, Ethylglykolmonomethylether, Diglykolmonoethylether, Diglykolmonobutylether u. ä. verwendet oder mit verwendet werden.

Die erfindungsgemäßen Farbstoffe färben kationisch anfärbbare Materialien wie z. B. Polyacrylnitril, sauer modifizierten Polyester und Polyamid, Wolle und Leder, aber auch cellulosehaltige Materialien wie z. B. Baumwolle und Celluloseregenerat-Fasern, insbesondere Papier mit guten Echtheiten in orangefarbenen bis gelben Tönen.

Die Farbstoffe können zum Papiermasse-Färben oder zur Papieroberflächenfärbung eingesetzt werden. Sie sind geeignet für geleimte und für ungeleimte Papiersorten ausgehend von gebleichtem oder ungebleichtem Zellstoff verschiedener Provenienz wie Nadel- oder Laubholz-Sulfit- und/oder -Sulfat-Zellstoff.

Das Färben erfolgt vorzugsweise bei pH-Werten von 4 bis 8, insbesondere pH 5 bis 7. Die Färbtemperatur beträgt im allgemeinen 10° bis 50 °C, vorzugsweise etwa 20°.

Die bei der Papierfärbung und -Herstellung üblichen Hilfsmittel und Füllstoffe können auch beim Einsatz der erfindungsgemäßen Farbstoffe mitverwendet werden. Die Farbstoffe besitzen bei der Papierfärbung ein ausgezeichnetes Ziehvermögen.

Die mit den erfindungsgemäßen Farbstoffen erhaltenen Papierfärbungen zeichnen sich durch sehr gute Wasserechtheit (Ausblutechtheit) sowie Säure-, Alkali- und Alaun-Echtheit aus. Hervorzuheben ist aber die überraschend hohe Lichtechtheit der Papierfärbungen. Auch auf die Brillanz und Klarheit der gelben bis orangen Farbtöne ist hinzuweisen. Ferner ist das Kombinationsverhalten mit geeigneten Farbstoffen sehr gut.

Die Farbstoffe können auch zum Färben von Baumwolle und Celluloseregenerat-Fasern eingesetzt werden, ohne daß die bisher üblichen Hilfsmittel wie z. B. die Tannin-Vorbehandlung angewendet werden müssen ; auch auf die Zugabe von Salz kann verzichtet werden.

Das Färben erfolgt dann vorzugsweise bei pH-Werten von 4 bis 8, insbesondere bei pH 5 bis 7. Die Färbtemperatur beträgt im allgemeinen 60° bis 130 °C, vorzugsweise 80° bis 100 °C.

Aus der DE-A-19 65 992 sind kationische Azofarbstoffe bekannt, die einen endständigen Benzthiazolylrest in der Diazokomponente aufweisen und zum Färben von Kunststoffmassen, Leder und Papier geeignet sind. Die nächstliegenden Beispiele unterscheiden sich von den Farbstoffen der vorliegenden Erfindung auch in der Kupplungskomponente, die eine über Methylen an einen Benzolring gebundene Ammoniumgruppe trägt. Azofarbstoffe, deren Ammoniumgruppe direkt am Benzolring der Kupplungskomponente sitzt, sind aus der FR-A-1 533 643 bekannt. Sie unterscheiden sich von den Farbstoffen der vorliegenden Erfindung durch die Substituenten der Diazokomponente und sind zum Färben von Haar geeignet.

Herstellung der Kupplungskomponenten

Beispiel 1

0,5 Mol = 90 g 2-Amino-4-acetylamino-anisol werden in 500 ml Wasser suspendiert und innerhalb 3 Stunden mit 120 ml Dimethylsulfat versetzt, wobei der pH-Wert bei 6 gehalten wird. Nachdem die Quaternierung beendet ist, wird die erhaltene Lösung zur Hydrolyse der Acetylgruppe mit 70 ml konz. Salzsäure 3 Stunden gekocht. Nach der Verseifung wird auf 20 °C abgekühlt, der pH-Wert mit Soda auf 3 gestellt und 46 g Diketen innerhalb 1 Stunde zugetropft, wobei der pH-Wert mit 20 %iger Sodalösung bei 3 gehalten wird. Man erhält eine Lösung von 0,45 Mol der Verbindung der Formel

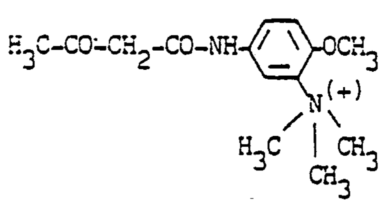

$Cl^{(-)}$ bzw. $1/2\ SO_4^{2(-)}$

Die Lösung kann direkt zur Herstellung von Azofarbstoffen eingesetzt werden.

Versetzt man diese Lösung mit Natriumperchlorat, so fällt das Trimethyl-(2-methoxy-5-acetoacetylaminophenyl)-ammoniumperchlorat praktisch quantitativ aus.

$^1$H-NMR-Daten in DMSO-$d_6$ : δ (ppm) = 2.22, s, 3H ; 3,58, s, 2H ; 3.66, s, 9H ; 3.99, s, 3H ; 7.4, vd, 1H ; 7.78, m, 1H, 8.18, d, 1H ; 10,35, vs, 1H

Mit KBr, NaJ, Chlorzinklauge und anderen geeigneten Salzen lassen sich die Arylide mit den entsprechenden Anionen ausfällen.

Analog werden folgende Acetoacetyl-Janusbasen hergestellt :

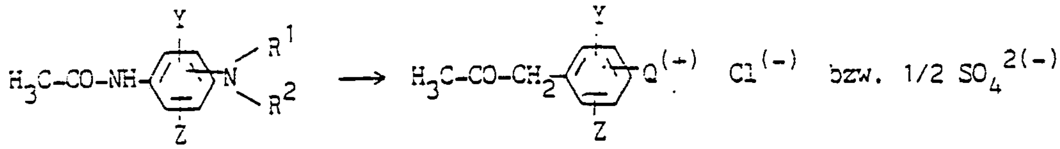

| Bsp. Nr. | 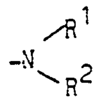 | Y | Z | Q |
|---|---|---|---|---|
| 2 | $2\text{-}NH_2$ | H | H | $2\text{-}N(CH_3)_3$ |
| 3 | $3\text{-}NH_2$ | H | H | $3\text{-}N(CH_3)_3$ |
| 4 | $4\text{-}NH_2$ | H | H | $4\text{-}N(CH_3)_3$ |
| 5 | $4\text{-}NH_2$ | 3-Cl | 6-Cl | $4\text{-}N(CH_3)_3$ |
| 6 | $3\text{-}NH_2$ | $6\text{-}CH_3$ | H | $3\text{-}N(CH_3)_3$ |
| 7 | $3\text{-}NH_2$ | $4\text{-}CH_3$ | H | $3\text{-}N(CH_3)_3$ |
| 8 | $4\text{-}NH_2$ | $3\text{-}CH_3$ | H | $4\text{-}N(CH_3)_3$ |
| 9 | $2\text{-}NH_2$ | $4\text{-}CH_3$ | H | $2\text{-}N(CH_3)_3$ |
| 10 | $3\text{-}NH_2$ | $4\text{-}OCH_3$ | H | $3\text{-}N(CH_3)_3$ |
| 11 | $4\text{-}NH_2$ | $2\text{-}OCH_3$ | H | $4\text{-}N(CH_3)_3$ |
| 12 | $4\text{-}NH_2$ | $2\text{-}OCH_3$ | 5-Cl | $4\text{-}N(CH_3)_3$ |
| 13 | $2\text{-}NH_2$ | $4\text{-}OC_2H_5$ | H | $2\text{-}N(CH_3)_3$ |
| 14 | $3\text{-}N(C_2H_4OH)_2$ | $4\text{-}OCH_3$ | H | $3\text{-}N(C_2H_4OH)_2CH_3$ |
| 15 | $3\text{-}N(CH_3)_2$ | H | H | $3\text{-}N(CH_3)_3$ |
| 16 | $4\text{-}N(C_2H_5)_2$ | H | H | $4\text{-}N(C_2H_5)_2CH_3$ |

Verwendet man in den Beispielen 1-16 anstelle von Dimethylsulfat Diethylsulfat, so erhält man die entsprechende N-Ethyl-ammoniumverbindung. Anstelle der N-Acetyl-Verbindung können auch die N-Formyl-, Benzoyl- oder Oxalyl-Verbindungen verwendet werden.

## Beispiel 17

Man verfährt analog Beispiel 1, arbeitet jedoch in einem Druckgefäß und methyliert mit Methylchlorid bei ≈3-4 bar und hält den pH-Wert mit 40 % Natronlauge bei pH 7, so erhält man das Trimethyl-(2-methoxy-5-acetoacetylaminophenyl)-ammonium-chlorid frei von Sulfat-Ionen. Aus der Lösung kann man das Chlorid, verunreinigt nur mit Kochsalz, durch Einrotieren am Rotationsverdampfer fest isolieren. Analoges gilt für Beispiel 2-16.

## Beispiel 18

0,5 Mol = 94 g Trimethyl-(3-aminophenyl)-ammoniumchlorid (m-Janusbase), hergestellt durch Reduktion der entsprechenden Nitroverbindung (mit $H_2$/Ni) werden in 500 ml Wasser bei pH 3,5 gelöst und mit 46 g Diketen innerhalb 41 Stunde versetzt. Der pH-Wert wird mit 20 %iger Sodalösung gehalten. Man erhält eine Lösung um 0,48 Mol = 95 % d. Th. der Acetoacetyl-m-Janusbase der Formel

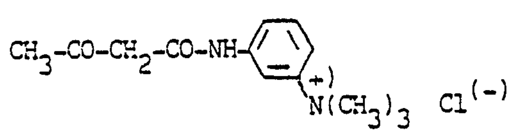

die direkt für die Herstellung von Azofarbstoffen verwendet werden kann. Das mit Natriumperchlorat gefällte Perchlorat hat folgende $^1$H-NMR-Daten (DMSO, TMS = 0 ppm) : δ = 2,25, s, 3H ; 3,58, s, 2H ; 3.63, s, 9H, 7,58, m, 3H ; 8,15, m. 1H ; 10,28, vs, 1H.

Analog werden folgende Arylide hergestellt.

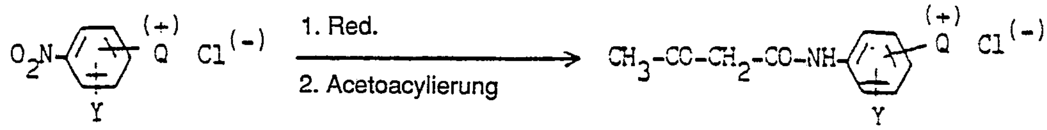


| Bsp.Nr. | Q | Y |
|---|---|---|
| 19 | $4-N(C_2H_5)_2CH_3$ | $2-OCH_3$ |
| 20 | $3-N(CH_3)_2C_2H_5$ | $4-OCH_3$ |
| 21 | $3-N(CH_3)_3$ | $4-OC_2H_5$ |
| 22 | $4-N(CH_3)_3$ | 2-Cl |
| 23 | $2-N(CH_3)_3$ | 4-Cl |
| 24 | $3-N(CH_3)_3$ | 6-Cl |
| 25 | $4-N(C_2H_5)_2CH_3$ | H |
| 26 | 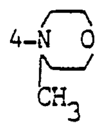 | H |
| 27 | $3-N(CH_3)_2C_2H_5$ | $4-CH_3$ |
| 28 | $4-N(C_2H_5)_3$ | $3-CH_3$ |
| 29 | $4-N(C_2H_4OH)CH_3$ | H |
| 30 | $4-N(C_2H_5)_2CH_3$ | $3-OCH_3$ |
| 31 | $3-N(CH_3)_3$ | $4-OCH_3$ |

Beispiel 32

0,5 Mol = 109 g Trimethyl-(3-amino-4-methoxyphenyl)-ammonium-chlorid werden in 300 ml Wasser gelöst und bei pH 6 und 45-50 °C mit 100 g Acetessigsäuremethylester innerhalb 1 Stunde versetzt. Der pH-Wert wird mit Natriumhydrogencarbonat gehalten. Man erhält eine Lösung von 0,4 Mol = 80 % d. Th. der Verbindung

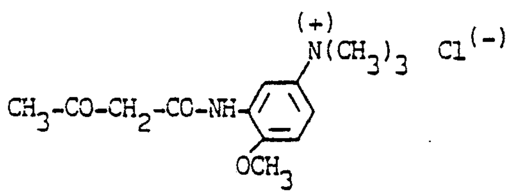

Das Perchlorat hat folgende $^1$H-NMR-Daten in DMSO-$d_6$ : δ (TMS = 0) : 2,24, s, 3H ; 3,60, s, 9H ; 3,75, s, 2H ; 3,97, s, 3H ; 7.26, d, 1H ; 7.71, dd, 1H ; 8.69, d, 1H ; 9,8, vs, 1H.

Beispiel 33

Arbeitet man analog Beispiel 32, verwendet jedoch 90 g Cyanessigsäuremethylester, so erhält man eine wässrige Lösung von 0,43 Mol = 80 % d. Th. der Verbindung

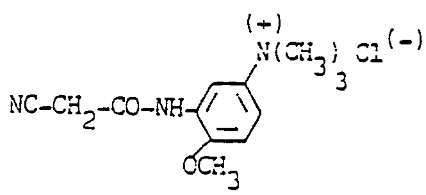

Das Perchlorat hat folgende $^1$H-NMR-Daten in DMSO-$d_6$ : δ (TMS = 0) : 3.61, s, 9H ; 3,79, s, 2H ; 3,96, s, 3H ; 7.26, d, 1H ; 7.70, dd, 1H, 8.71, d, 1H ; 10,15, vs, 1H.

Verwendet man anstelle von Cyanessigsäuremethylester Malonsäuredimethylester, so erhält man eine Lösung des entsprechenden Malonestermonoamids

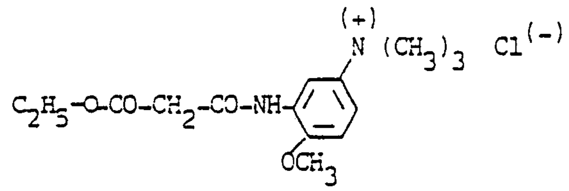

Analog werden folgende Cyanacetamide bzw. Malonesteramide anderer Janusbasen hergestellt :

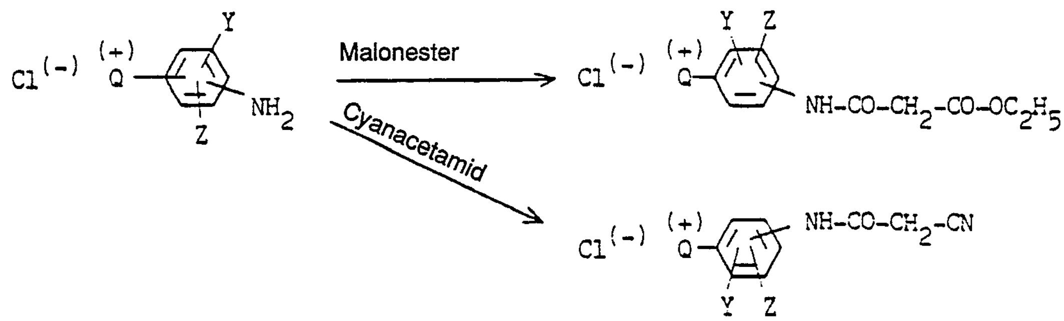


wobei, Q, Y, Z jeweils die Substituenten der Beispiele 2-16 u. 19-23 sind.

Herstellung der Farbstoffe

## Beispiel 34

0,25 Mol = 52 g 2-(4'-Aminophenyl)-benzimidazol werden in 700 ml Wasser und 65 ml 30 %iger Salzsäure mit 60 ml 30 %iger Natriumnitritlösung diazotiert. Die so erhaltene Suspension der Diazoniumverbindung wird zu der Lösung von 0,25 Mol des in Beispiel 11 beschriebenen Arylids gegeben und wie in Beispiel 34 beschrieben gekuppelt und der ausgefallene Farbstoff der Formel

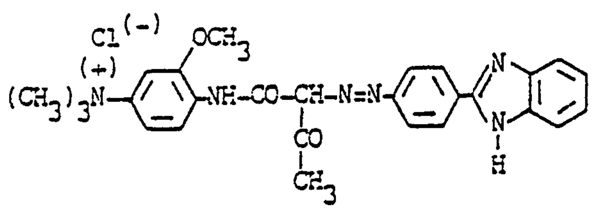

isoliert. $\lambda_{max}$ : 391 nm. Er ergibt als Pulver und als 13 %ige Lösung in 30 %iger Ameisensäure brillante grünstichig-gelbe Färbungen auf Baumwolle, Papier, Leder und Polyacrylnitril.

Verwendet man statt des Arylids des Beispiels 11 diejenigen der Beispiele 1-10, 12-16 und 19-32 und arbeitet analog Beispiel 34, so erhält man wertvolle Farbstoffe der Formel

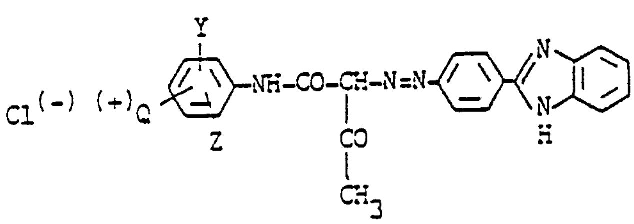

die als Pulver oder Lösung Papier und Baumwolle in echten grünstichig-gelben Tönen anfärben. Q, Y, Z sind jeweils die Substituenten der in den Beispielen 1-10, 12-16, 19-32 beschriebenen Arylide.

## Beispiel 35

0,1 Mol = 19 g 4-Aminoazobenzol werden in 300 ml Wasser und 25 ml 30 %iger Salzsäure angerührt. Nach dem Abkühlen auf 5 °C wird mit 24 ml 30 %iger Natriumnitrit-Lösung diazotiert. Diese Diazotierung

wird zu 0,1 Mol = 200 ml des Arylids von Beispiel 1 gegeben und bei pH 4 und 5-10 °C gekuppelt. Der Farbstoff der Formel

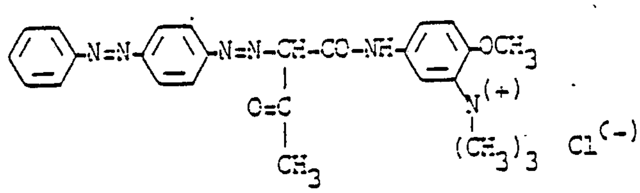

wird abgesaugt, $\lambda_{max}$ : 401 nm. Er färbt Papier und Baumwolle in lichtechten, klaren gelben Tönen.

Beispiel 36

Verwendet man als Diazokomponente 0,1 Mol des Aminoazobenzols der Formel

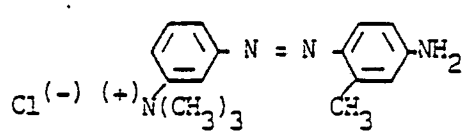

und verfährt wie in Beispiel 35, so erhält man eine Lösung des Farbstoffs der Formel

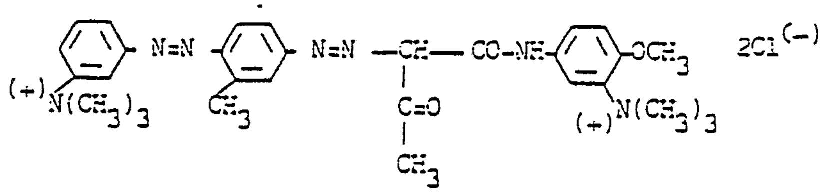

der mit KBr als Bromid ausgefällt wird. $\lambda_{max}$ : 409 nm. Die Lösung wie auch der isolierte Farbstoff ergeben auf Papier und Baumwolle echte, gelbe Färbungen.

Beispiel 37

Verwendet man als Diazokomponente das Aminoazobenzol der Formel

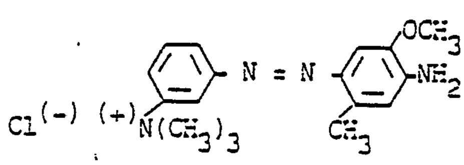

und verfährt wie in Beispiel 35, so erhält man den entsprechenden Farbstoff, der Papier und Baumwolle in orangen Tönen färbt. $\lambda_{max}$ : 419 nm.

Verwendet man in den Beispielen 35-37 anstelle des Arylides 1 die Arylide der Beispiele 2-16 und 18-32, so erhält man ebenfalls wertvolle Farbstoffe der Formel

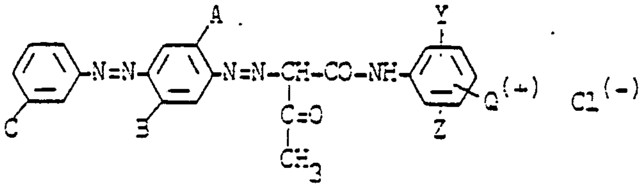

wobei Q, Y, Z jeweils die Substituenten der Arylide der Beispiele 1-16, 18-32 sind, sowie A, B und C in der Reihe von Beispiel 35 jeweils für H steht, für die Reihe von Beispiel 36 A = H, B = $CH_3$,

C =$^{(+)}N(CH_3)_3Cl^{(-)}$ und für die Reihe von Beispiel 37 A = $OCH_3$, B = $CH_3$, C = $^{(+)}N(CH_3)_3Cl^{(-)}$ bedeuten. Sie ergeben gelbe bis orange echte Färbungen auf Papier und Baumwolle.

Beispiel 38

0,25 Mol = 56,7 g 4,4'-Diaminobenzanilid werden in 700 ml Wasser eingetragen und 4 Stunden verrührt. Dann wird mit 140 ml 30 %ige Salzsäure versetzt und innerhalb 1 Stunde mit 114 ml 30 %iger Natriumnitrit-Lösung diazotiert. Man hält mit Eis eine Temperatur von 20-26 °C. Die Tetrazotierung geht in Lösung. Nach 1 Stunde Nachrührzeit wird der Nitritüberschuß mit Amidosulfonsäure zerstört. Die Lösung der Tetrazotierung gibt man innerhalb 1 Stunfe zu 0,5 Mol der in Beispiel 1 beschriebenen Lösung (ca. 1,1 l) und hält den pH-Wert mit Natriumbikarbonat bei 5 und die Temperatur bei 20-25 °C. Nach 1 Stunde Nachrühren ist die Kupplung beendet und der Farbstoff praktisch quantitativ ausgefallen. Nach dem Absaugen erhält man 900 g Paste des Farbstoffs der Formel

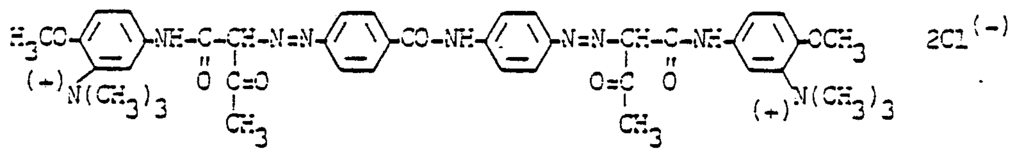

$\lambda_{max}$ : 401 nm.

Die Paste kann getrocknet werden oder direkt zu einer Lösung aus z. B. 10 % Farbstoff, 25% Ameisensäure und 65 % Wasser verarbeitet werden. Pulver sowie Lösung geben auf Baumwolle, Papier, Leder und Polyacryl brillante, echte grünstichig gelbe Färbungen.

Verwendet man in Beispiel 38 anstelle des Arylides Beispiel 1 die Arylide der Beispiele 2-16 und 19-32, so erhält man ebenfalls brillante, grünstichig gelbe Farbstoffe mit $\lambda_{max}$-Werten von ca. 400 nm der Formel

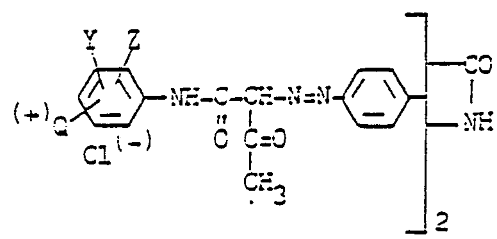

wobei Q, Y, Z jeweils die Substituenten der Arylide in den Beispielen 2-16 und 19-32 sind, die Baumwolle und Papier in echten, brillanten Gelbtönen anfärben.

Beispiel 39

Verwendet man Dianisidin als Diazokomponente und verfährt analog Beispiel 38, so erhält man den Farbstoff der Formel

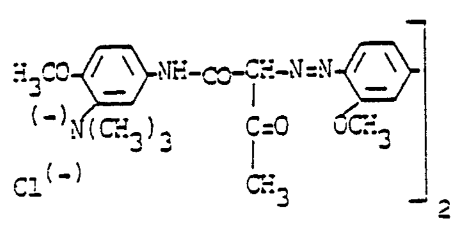

mit $\lambda_{max}$ = 443 nm der Papier und Baumwolle in klaren Orangen Tönen anfärbt.

Beispiel 40

Verwendet man 4,4'-Diaminoazobenzol als Diazokomponente und verfährt analog Beispiel 38, so erhält man den Farbstoff der Formel

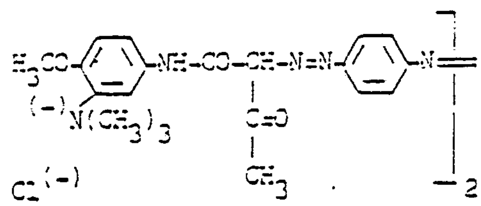

mit $\lambda_{max}$ = 452 nm der Papier und Baumwolle in echten rotorangen Tönen anfärbt.

Beispiel 41

Verwendet man 2-(4-Aminophenyl)-5-amino-benzimidazol als Diazokomponente und verfährt wie in Beispiel 38, so erhält man den Farbstoff der Formel

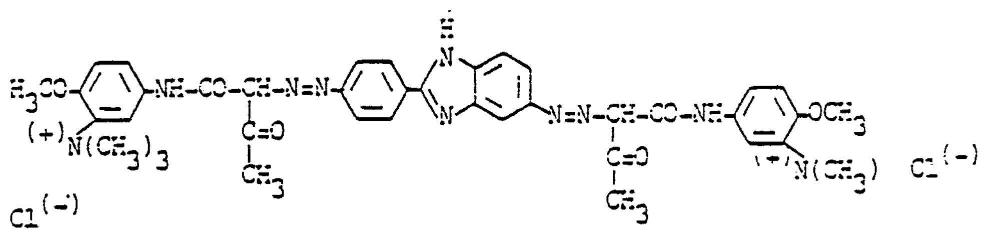

mit $\lambda_{max}$ = 432 nm, der Papier und Baumwolle in rotstichig gelben Tönen mit guten Echtheiten anfärbt.

Beispiel 42

Verwendet man 2,4-Bis-(4'-aminophenylamino)-6-dimethylaminotriazin als Diazokomponente und verfährt analog Beispiel 38 so erhält man den Farbstoff der Formel

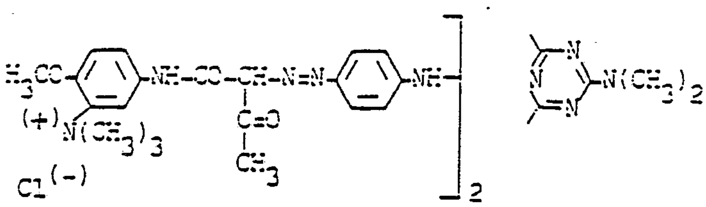

mit $\lambda_{max}$ = 411 nm, der Papier und Baumwolle in echten, gelben Tönen anfärbt.

Verwendet man in den Beispielen 39-42 der Arylide der Beispiele 2-16 und 19-32, so erhält man Farbstoffe mit vergleichbaren Farbtönen.

Beispiel 43

Ein aus 60 % Holzschliff und 40 % ungebleichtem Sulfitzellstoff bestehender Trockenstoff wird im Holländer mit Wasser angeschlagen und bis zum Mahlgrad 40° SR gemahlen, so daß der Trockengehalt etwa über 2,5 liegt und anschließend mit Wasser auf 2,5 % Trockengehalt des Dickstoffs eingestellt.

200 Teile dieses Dickstoffs werden mit 5 Teilen einer 0,5 %igen essigsauren wäßrigen Lösung des Farbstoffs aus Beispiel 38 versetzt, ca. 5 Minuten verrührt, mit 2 % Harzleim und 3 % Alaun (bezogen auf Trockenstoff) versetzt und wieder einige Minuten bis zur Homogenität verrührt. Man verdünnt die Masse nur mit ca. 500 Teilen Wasser und stellt hieraus in üblicher Weise durch Absaugen über einen Blattbildner Papierblätter her. Die Papierblätter weisen eine grünstichig gelbe Färbung auf. Das Abwasser der Färbung ist praktisch farbstoffrei.

Beispiel 44

Verwendet man statt des in Beispiel 43 eingesetzten Farbstoffs den Farbstoff aus Beispiel 34, so erhält man ebenfalls grünstichig gelb gefärbte Papierblätter und ein praktisch farbstoffreies Abwasser.

Beispiel 45

Auch beim Färben von ungebleichter Papiermasse unter sonst gleichen Färbebedingungen und bei der Verwendung von gebleichtem Sulfitzellstoff erhält man grünstichig gelbe Papierfärbungen und praktisch farbstoffreie Abwässer.

**Patentansprüche**

1. Kationische Farbstoffe der allgemeinen Formel

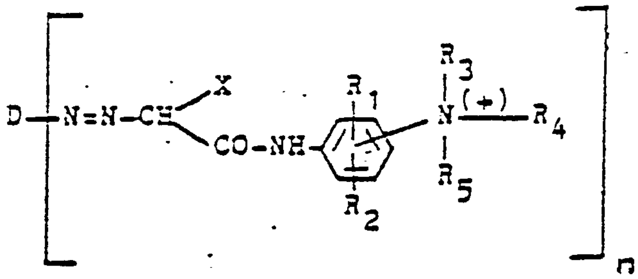

$nAn^{(-)}$

worin

D einen Rest der Formel

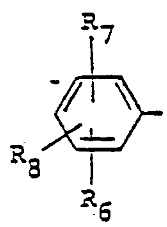

oder

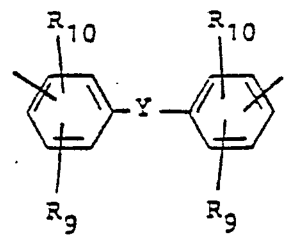

X einen Rest der Formel $COCH_3$, CN, $COOCH_3$, $COOC_2H_5$, $CONH_2$, $COC_6H_5$,

$R_1$ und $R_2$ unabhängig voneinander Wasserstoff, Fluor, Chlor, Brom, $C_1$- bis $C_4$-Alkyl oder $C_1$- bis $C_4$-Alkoxy,

$R_3$, $R_4$ und $R_5$ unabhängig voneinander $C_1$- bis $C_4$-Alkyl, $C_3$- oder $C_4$-Alkenyl, Benzyl oder Phenylethyl, die durch Hydroxy, $C_1$- bis $C_4$-Alkoxy, Chlor, Brom oder Cyan und der Benzyl- und Phenylethylrest zusätzlich durch $C_1$- bis $C_4$-Alkyl substituiert sein können, bedeuten, oder

$R_3$ und $R_4$ gemeinsam mit dem Stickstoffatom, an das sie gebunden sind einen gegebenenfalls durch $C_1$- bis $C_4$-Alkyl substituierten Pyrrolidin-, Morpholin-, Piperidin- oder Piperazinring bilden,

$R_6$ und $R_7$ unabhängig voneinander Wasserstoff, $C_1$- bis $C_4$-Alkyl, $C_1$- bis $C_4$-Alkoxy, Fluor, Chlor, Brom oder NH-Ac,

Ac $C_1$- bis $C_4$-Alkyl-carbonyl, -sulfonyl oder -carbamoyl, Benzoyl, Toluoyl, Phenyl- oder Tolylsulfonyl oder -carbamoyl oder gegebenenfalls substituiertes Triazinyl,

$R_8$ einen Rest der Formel

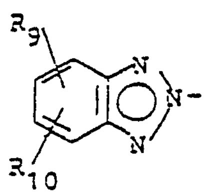

oder

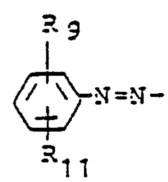

$R_9$-$R_{11}$ unabhängig voneinander Wasserstoff, $C_1$- bis $C_4$-Alkyl, $C_1$- bis $C_4$-Alkoxy, Chlor oder Brom und

$R_{11}$ zusätzlich

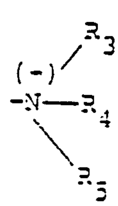

$An^{(-)}$

Y eine direkte Bindung oder ein Brückenglied,

n 1 oder 2 und

$An^{(-)}$ ein Anion bedeuten.

2. Kationische Farbstoffe des Anspruchs 1, wobei Y für eine direkte Bindung oder ein brückenglied der Formel

—CO—NH—, —CO—, —NH—CO—NH—, $—CH_2—CH_2—$, —CH=CH—, $—CH_2—$, $—C(CH_3)_2—$, 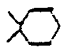 , —O—, —S—, —NH—, $\geq$N—$C_1$-$C_4$-Alkyl, —N=N—, —NH—CO—CH=CH—CO—NH—, —NH—CO—$CH_2$—$CH_2$—CO—NH— und

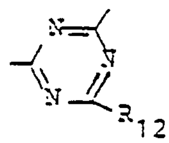

steht, wobei $R_{12}$ für Alkyl, Aryl,

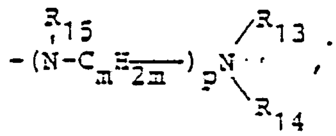 , $-O-R_{15}$ oder $-S-R_{15}$.

steht,

m 2 oder 3, p 0 oder 1 und

$R_{13}$, $R_{14}$ und $R_{15}$ Wasserstoff, Alkyl, Alkenyl, Aryl, Aralkyl oder Cycloalkyl bedeuten, oder

$R_{13}$ und $R_{14}$ gemeinsam mit dem N-Atom, an das sie gebunden sind, einen 5- oder 6-gliedrigen Ring bilden, oder

$R_{13}$ Amino bedeutet.

3. Kationische Farbstoffe des Anspruchs 2, wobei

$R_{12}$ für $C_1$- bis $C_4$-Alkyl oder Phenyl, die durch Hydroxy, $C_1$- bis $C_4$-Alkoxy, Chlor oder Brom und Phenyl zusätzlich durch $C_1$- bis $C_4$-Alkyl substituierte sein können, oder für

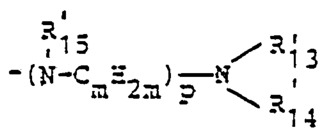 , $-O-R'_{15}$ oder $-S-R'_{15}$

steht, und

$R'_{13}$, $R'_{14}$ und $R'_{15}$ unabhängig voneinander Wasserstoff, Gegebenenfalls durch Hydroxy, Halogen, Cyan oder $C_1$-$C_4$-Alkoxy substituiertes $C_1$-$C_4$-Alkyl, $C_2$-$C_4$-Alkenyl oder gegebenenfalls durch Halogen, $C_1$-$C_4$-Alkyl, Hydroxy oder $C_1$-$C_4$-Alkoxy substituiertes Benzyl, Phenylethyl, Phenyl, Naphthyl oder Cyclohexyl bedeuten, oder

$R'_{13}$ und $R'_{14}$ zusammen mit dem an sie gebundenen N-Atom ein gegebenenfalls durch $C_1$-$C_4$-Alkyl substituiertes Pyrrolidin, Piperidin, Morpholin oder Piperazin, dessen externes Stickstoffatom durch gegebenenfalls OH- oder $NH_2$— substituiertes $C_1$-$C_4$-Alkyl alkyliert oder quaterniert sein kann, bilden.

4. Kationische Farbstoffe des Anspruchs 1 der allgemeinen Formel

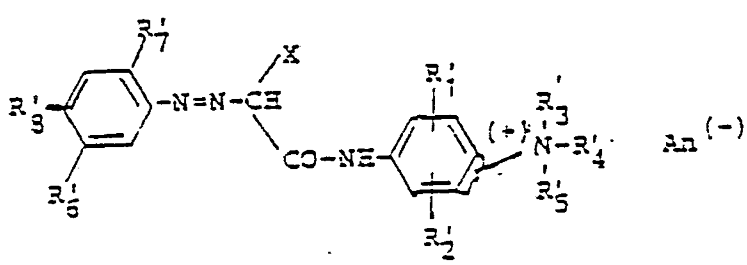

worin

$R'_6$ Wasserstoff, Methoxy, Ethoxy, Methyl, Ethyl, Fluor, Chlor, Brom oder NH-Ac,

$R'_7$ Wasserstoff, Fluor, Chlor, Brom, Methoxy, Ethoxy, Methyl oder Ethyl und

$R'_8$ einen Rest der Formel

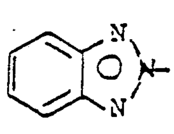 oder 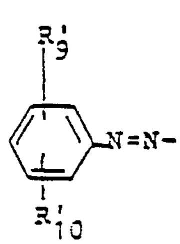

R'$_1$, R'$_2$, R'$_9$ und R'$_{10}$ unabhängig voneinander Wasserstoff, Fluor, Chlor, Brom, Methoxy, Ethoxy, Methyl oder Ethyl und

R'$_3$, R'$_4$ und R'$_5$ unabhängig voneinander $C_1$- bis $C_4$-Alkyl, β- oder γ-Hydroxy-$C_2$- bis $C_4$-Alkyl oder Benzyl bedeuten, oder

R'$_3$ und R'$_4$ mit dem Stickstoff einen Pyrrolidin-, Morpholin- oder Piperidin-Ring bilden, und

X und $An^{(-)}$ die Bedeutung von Anspruch 1 haben.

5. Kationische Farbstoffe des Anspruchs 1 der allgemeinen Formel

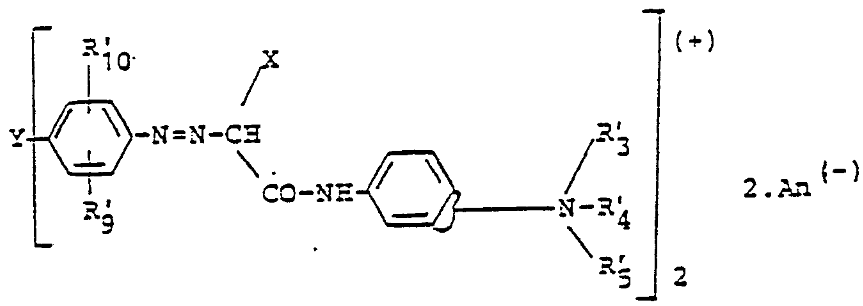

worin die Symbole die Bedeutung der Ansprüche 2-4 haben.

6. Verfahren zur Herstellung von kationischen Farbstoffen des Anspruchs 1, dadurch gekennzeichnet, daß man Amine der Formel

$$D—(NH_2)_n$$

diazotiert und mit Verbindungen der Formel

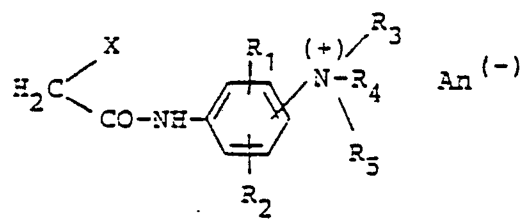

wobei die Symbole die in Anspruch 1 angegebene Bedeutung haben, kuppelt.

7. Verfahren zum Färben von Papier, dadurch gekennzeichnet, daß man Farbstoffe des Anspruchs 1 verwendet.

**Claims**

1. Cationic dyestuffs of the general formula

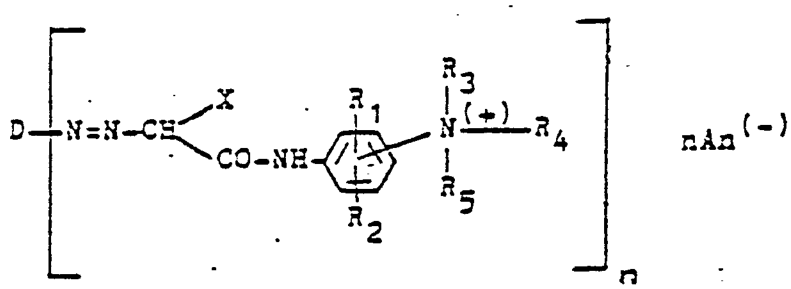

wherein

D denotes a radical of the formula

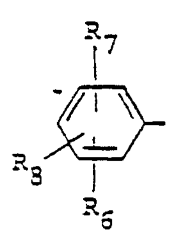

or

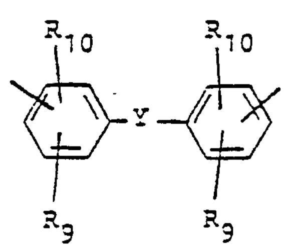

X denotes a radical of the formula $COCH_3$, CN, $COOCH_3$, $COOC_2H_5$, $CONH_2$ or $COC_6H_5$,

$R_1$ and $R_2$ independently of each other denote hydrogen, fluorine, chlorine, bromine, $C_1$- to $C_4$-alkyl or $C_1$- to $C_4$-alkoxy,

$R_3$, $R_4$ and $R_5$ independently of one another denote $C_1$- to $C_4$-alkyl, $C_3$- or $C_4$-alkenyl, benzyl or phenylethyl, each of which can be substituted by hydroxyl, $C_1$- to $C_4$-alkoxy, chlorine, bromine or cyano, and the benzyl and phenylethyl radicals additionally by $C_1$- to $C_4$-alkyl or

$R_3$ and $R_4$, together with the nitrogen atom to which they are bonded, form an optionally $C_1$- to $C_4$-alkyl-substituted pyrrolidine, morpholine, piperidine or piperazine ring,

$R_6$ and $R_7$ independently of each other denote hydrogen, $C_1$- to $C_4$-alkyl, $C_1$- to $C_4$-alkoxy, fluorine, chlorine, bromine or NH—Ac,

Ac denotes $C_1$- to $C_4$-alkylcarbonyl, -alkylsulphonyl or -alkylcarbamoyl, benzoyl, toluoyl, phenylsulphonyl, phenylcarbamoyl, tolylsulphonyl, tolylcarbamoyl or optionally substituted triazinyl,

$R^8$ denotes a radical of the formula

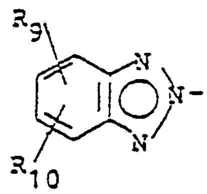 or 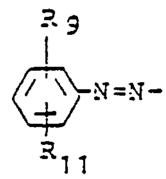

$R_9$-$R_{11}$ independently of one another denote hydrogen, $C_1$- to $C_4$-alkyl, $C_1$- to $C_4$-alkoxy, chlorine or bromine and

$R_{11}$ additionally denotes

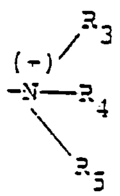 $An^{(-)}$

Y denotes a direct bond or a bridging link.
n denotes 1 or 2 and
$An^{(-)}$ denotes an anion

2. Cationic dyestuffs of claim 1, where Y represents a direct bond or a bridging link of the formula

—CO—NH—, —CO—, —NH—CO—NH—, $—CH_2—CH_2—$, —CH=CH—, $—CH_2—$, $—C(CH_3)_2—$,

, —O—, —S—, —NH—, $>$N—$C_1$-$C_4$-Alkyl, —N=N—, —NH—CO—CH=CH—CO—NH—,

—NH—CO—$CH_2$—$CH_2$—CO—NH— und

where $R_{12}$ represents alkyl, aryl,

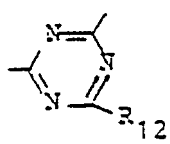

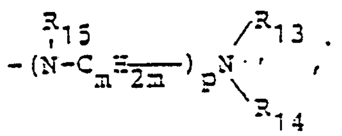

—O—$R_{15}$ or —S—$R_{15}$,

m denotes 2 or 3, p denotes 0 or 1 and

$R_{13}$, $R_{14}$ and $R_{15}$ denote hydrogen, alkyl, alkenyl, aryl, aralkyl or cycloalkyl or

$R_{13}$ and $_{14}$, together with the N atom to which they are bonded, form a 5- or 6-membered ring or

$R_{13}$ denotes amino.

3. Cationic dyestuffs of Claim 2, where

$R_{12}$ represents $C_1$- to $C_4$-alkyl or phenyl, either of which can be substituted by hydroxyl, $C_1$- to $C_4$-alkoxy, chlorine or bromine and phenyl additionally by $C_1$- to $C_4$-alkyl, or

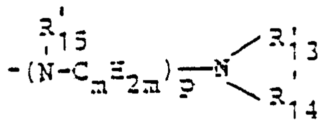

—O—$R'_{15}$ or —S—$R'_{15}$ and

$R'_{13}$, $R'_{14}$ and $R'_{15}$ independently of one another denote hydrogen, optionally hydroxyl-, halogen-, cyano- or $C_1$-$C_4$-alkoxy-substituted $C_1$-$C_4$-alkyl, $C_2$-$C_4$-alkenyl or optionally halogen-, $C_1$-$C_4$-alkyl-, hydroxyl- or $C_1$-$C_4$-alkoxy-substituted benzyl, phenylethyl, phenyl, naphthyl or cyclohexyl, or

$R'_{13}$ and $R'_{14}$, together with the N atom to which they are bonded, form an optionally $C_1$-$C_4$-alkyl-substituted pyrrolidine, piperidine, morpholine or piperazine, whose external nitrogen atom can be alkylated or quaternised by optionally OH- or $NH_2$-substituted $C_1$-$C_4$-alkyl.

4. Cationic dyestuffs of Claim 1, of the general formula

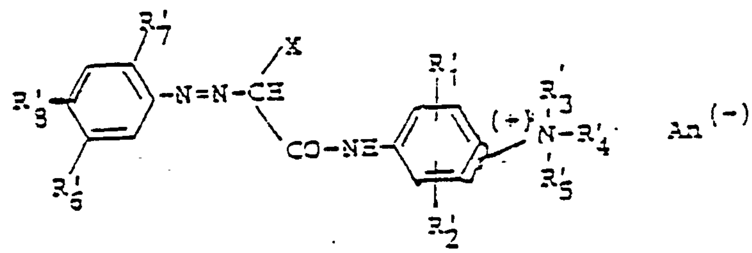

wherein

$R'_6$ denotes hydrogen, methoxy, ethoxy, methyl, ethyl, fluorine, chlorine, bromine or NH—Ac,

$R'_7$ denotes hydrogen, fluorine, chlorine, bromine, methoxy, ethoxy, methyl or ethyl and

$R'_8$ denotes a radical of the formula

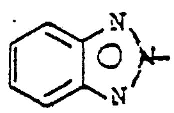

or

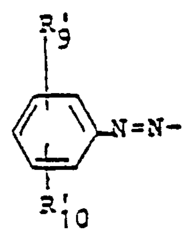

$R'_1$, $R'_2$, $R'_9$ and $R'_{10}$ independently of one another denote hydrogen, fluorine, chlorine, bromine, methoxy, ethoxy, methyl or ethyl and

$R'_3$, $R'_4$ and $R'_5$ independently of one another denote $C_1$- to $C_4$-alkyl, β- or γ-hydroxy-$C_2$- to $C_4$-alkyl or benzyl, or

$R'_3$ and $R'_4$, together with the nitrogen, form a pyrrolidine, morpholine or piperidine ring and

X and $An^{(-)}$ have the meaning of Claim 1.

5. Cationic dyestuffs of Claim 1, of the general formula

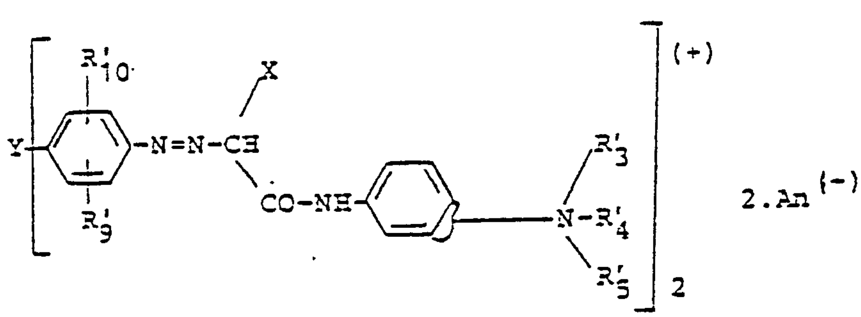

wherein the symbols have the meaning of Claims 2-4.

6. Process for preparing cationic dyestuffs of Claim 1, characterised in that amines of the formula

$$D—(NH_2)_n$$

are diazotised and the diazotised products are coupled with compounds of the formula

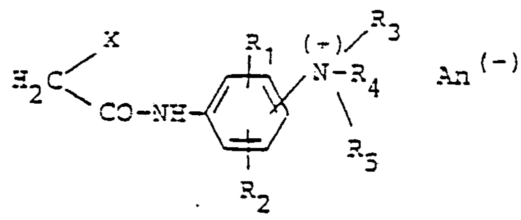

where the symbols have the meaning given in Claim 1.

7. Process for dyeing paper, characterised in that dyestuffs of Claim 1 are used.

**Revendications**

1. Colorants cationiques de formule générale

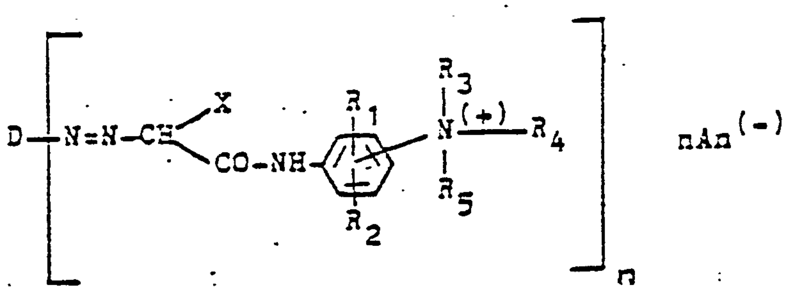

dans laquelle

D est un reste de formule

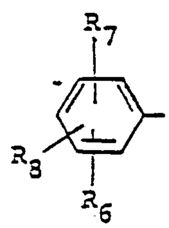

ou

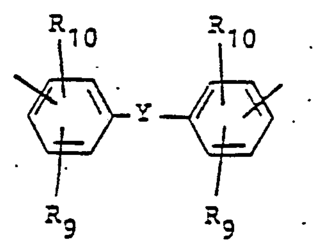

X est un reste de formule $COCH_3$, CN, $COOCH_3$, $COOC_2H_5$, $CONH_2$, $COC_6H_5$,

$R_1$ et $R_2$ représentent, indépendamment l'un de l'autre, l'hydrogène, le fluor, le chlore, le brome, un groupe alkyle en $C_1$ à $C_4$ ou alkoxy en $C_1$ à $C_4$,

$R_3$, $R_4$ et $R_5$ représentent, indépendamment les uns des autres, un groupe alkyle en $C_1$ à $C_4$, un groupe alcényle en $C_3$ ou $C_4$, un groupe benzyle ou un groupe phényléthyle, qui peuvent être substitués par un radical hydroxy, alkoxy en $C_1$ à $C_4$, du chlore, du brome ou un radical cyano et les restes benzyle et phényléthyle peuvent en outre être substitués par un radical alkyle en $C_1$ à $C_4$, ou bien

$R_3$ et $R_4$ forment, conjointement avec l'atome d'azote auquel ils sont liés, un noyau de pyrrolidine, de morpholine, de pipéridine ou de pipérazine facultativement substitué par un radical alkyle en $C_1$ à $C_4$,

$R_6$ et $R_7$ représentent, indépendamment l'un de l'autre, l'hydrogène, un groupe alkyle en $C_1$ à $C_4$, un groupe alkoxy en $C_1$ à $C_4$, du fluor, du chlore, du brome ou un groupe NH—Ac,

Ac est un groupe (alkyle en $C_1$ à $C_4$)-carbonyle, -sulfonyle ou -carbamoyle, un groupe benzoyle, toluoyle, phényl- ou tolylsulfonyle ou -carbamoyle ou un groupe triazinyle éventuellement substitué,

$R_8$ est un reste de formule

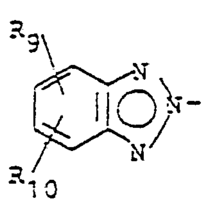

ou

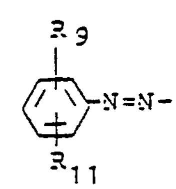

$R_9$ à $R_{11}$ représentent, indépendamment les uns des autres, de l'hydrogène, un groupe alkyle en $C_1$ à $C_4$, alkoxy en $C_1$ à $C_4$, du chlore ou du brome et

$R_{11}$ représente en outre un groupe

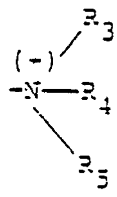 $An^{(-)}$

Y est une liaison simple ou un chaînon de pontage
n a la valeur 1 ou 2 et
$An^{(-)}$ désigne un anion.

2. Colorants cationiques suivant la revendication 1, dans lesquels Y représente une liaison simple ou un chaînon de pontage de formules

—CO—NH—, —CO—, —NH—CO—NH—, $—CH_2—CH_2—$, —CH=CH—, $—CH_2—$, $—C(CH_3)_2—$,
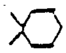 , —O—, —S—, —H—, > N—$C_1$-$C_4$-Alkyle, —N=N—, —NH—CO—CH=CH—CO—NH—,
—NH—CO—$CH_2$—$CH_2$—CO—NH— et

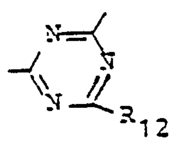

où $R_{12}$ est un radical alkyle, aryle,

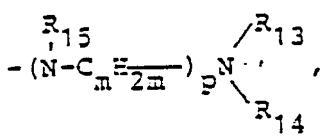 , $-O-R_{15}$ ou $-S-R_{15}$.

m a la valeur 2 ou 3, p a la valeur 0 ou 1 et
$R_{13}$, $R_{14}$ et $R_{15}$ désignent l'hydrogène, un groupe alkyle, alcényle, aryle, aralkyle ou cycloalkyle, ou bien
$R_{13}$ et $R_{14}$ forment, conjointement avec l'atome d'azote auquel ils sont liés, un noyau pentagonal ou hexagonal, ou bien
$R_{13}$ est un groupe amino.

3. Colorants cationiques suivant la revendication 2, dans lesquels
$R_{12}$ est un groupe alkyle en $C_1$ à $C_4$ ou un groupe phényle, qui peuvent être substitués par un radical hydroxy, alkoxy en $C_1$ à $C_4$, du chlore ou du brome et le groupe phényle peut en outre être substitué par un radical alkyle en $C_1$ à $C_4$, ou bien un groupe

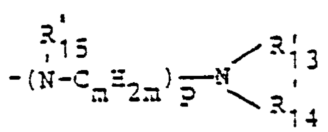 , $-O-R'_{15}$ ou $-S-R'_{15}$

et
$R'_{13}$, $R'_{14}$ et $R'_{15}$ représentent, indépendamment les uns des autres, l'hydrogène, un groupe alkyle en $C_1$ à $C_4$ éventuellement substitué par un radical hydroxy, halogéno, cyano ou alkoxy en $C_1$ à $C_4$, un groupe alcényle en $C_2$ à $C_4$ ou un groupe benzyle, phényléthyle, phényle, naphtyle ou cyclohexyle éventuellement substitué par un radical halogéno, alkyle en $C_1$ à $C_4$, hydroxy ou alkoxy en $C_1$ à $C_4$, ou bien
$R'_{13}$ et $R'_{14}$ forment, conjointement avec l'atome d'azote auquel ils sont liés, un groupe pyrrolidine, pipéridine, morpholine ou pipérazine éventuellement substitué par un radical alkyle en $C_1$ à $C_4$, dont l'atome externe d'azote peut être alkylé ou quaternisé par un radical alkyle en $C_1$ à $C_4$ portant éventuellement un substituant OH ou $NH_2$.

4. Colorants cationiques suivant la revendication 1, de formule générale

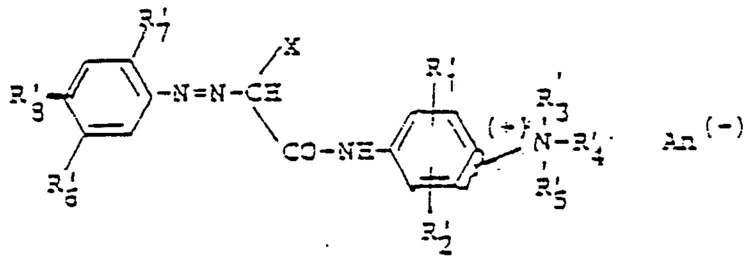

dans laquelle

R'$_6$ représente l'hydrogène, un groupe méthoxy, éthoxy, méthyle, éthyle, le fluor, le chlore, le brome ou un groupe NH—Ac,

R'$_7$ est l'hydrogène, le fluor, le chlore, le brome, un groupe méthoxy, éthoxy, méthyle ou éthyle et

R'$_8$ est un reste de formule

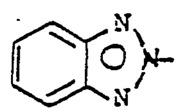

ou

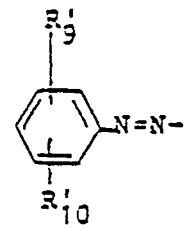

R'$_1$, R'$_2$, R'$_9$ et R'$_{10}$ représentent, indépendamment les uns des autres, l'hydrogène, le fluor, le chlore, le brome, un groupe méthoxy, éthoxy, méthyle ou éthyle et

R'$_3$, R'$_4$ et R'$_5$ représentent, indépendamment les uns des autres, un groupe alkyle en $C_1$ à $C_4$, β- ou γ-hydroxy-(alkyle en $C_2$ à $C_4$) ou benzyle, ou bien

R'$_3$ et R'$_4$ forment conjointement avec l'azote un noyau de pyrrolidine, morpholine ou pipéridine et

X et An$^{(-)}$ ont la définition indiquée dans la revendication 1.

5. Colorants cationiques suivant la revendication 1, de formule générale

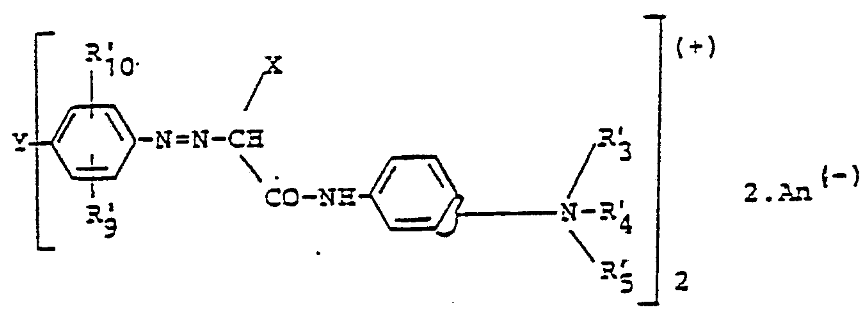

dans laquelle les symboles ont la définition des revendications 2 à 4.

6. Procédé de préparation de colorants cationiques suivant la revendication 1, caractérisé en ce qu'on diazote des amines de formule

$$D—(NH_2)_n$$

et on les fait copuler avec des composés de formule

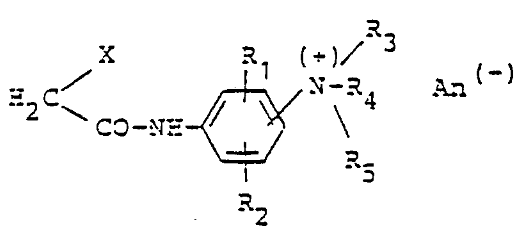

les symboles ayant la définition indiquée dans la revendication 1.

7. Procédé de coloration de papier, caractérisé en ce qu'on utilise des colorants suivant la revendication 1.